# FASCICULE DE BREVET EUROPEEN

(11) **EP 3 968 064 B1**
(45) Date de publication et mention de la délivrance du brevet: **17.04.2024**
(21) Numéro de dépôt: 21191574.9
(22) Date de dépôt: 16.08.2021
(51) Int. Cl.: G02B 5/18, G02B 5/20

(54) **DISPOSITIF DE FILTRAGE OPTIQUE**
OPTISCHE FILTERVORRICHTUNG
OPTICAL FILTERING DEVICE

(30) Priorité: 10.09.2020 FR 2009172
(43) Date de publication de la demande: 16.03.2022
(73) Titulaire: Commissariat à l'énergie atomique et aux énergies alternatives, 75015 Paris (FR)
(72) Inventeur: LE PERCHEC, Jérôme, 38054 GRENOBLE (FR)
(74) Mandataire: INNOV-GROUP

(56) Documents cités:
- WO-A1-2007/118895
- WO-A1-2018/185265
- FR-A1- 3 007 148

## Description

La présente invention concerne un dispositif de filtrage optique présentant une réponse en transmission avec un maximum à une longueur d'onde λ₀. L'invention concerne aussi un appareil réglable de filtrage optique incorporant ce dispositif de filtrage optique.

De tels filtres trouvent notamment application dans le domaine de la photo-détection visible et infrarouge, plus particulièrement destinée à la détection spectrale des gaz, et pour l'imagerie couleur visible et infrarouge.

Les dispositifs de filtrage optique micro ou nano-structurés sont généralement préférés pour leur grande compacité qui leur permet d'être intégrés dans des photo-détecteurs.

De tels dispositifs de filtrage optique sont par exemple divulgués dans le brevet US8937277B1. Dans ce brevet, le dispositif de filtrage présente une bande passante en transmission étroite autour de la longueur d'onde λ₀ et un taux de réjection important hors de cette bande passante. Cette bande passante étroite est aussi appelée "pic de transmission" dans ce texte. Dans ce texte, le taux de transmission est égal au ratio entre la quantité de rayonnement électromagnétique incident sur le dispositif de filtrage optique et la quantité de rayonnement électromagnétique ayant complètement traversé le dispositif. Le taux de transmission est égal à 1 ou à 100 %, à une longueur d'onde À, lorsque le dispositif est complètement transparent à cette longueur d'onde À. Le taux de réjection est l'inverse du taux de transmission. Le taux de réjection est égal à 1 ou à 100%, à une longueur d'onde λ, lorsque le dispositif est complètement opaque au rayonnement électromagnétique à cette longueur d'onde À.

Le dispositif de filtrage optique de US8937277B1 présente de nombreux avantages dont notamment :
- une compacité importante,
- une bande passante étroite,
- un pic de transmission dont l'amplitude est importante,
- un taux de réjection élevé sur une large plage de fréquences située autour du pic de transmission.

Ce dispositif connu de filtrage optique comporte des éléments réflecteurs déposés sur une face d'une lame demi-onde. Ces éléments réflecteurs définissent un réseau périodique sub-longueur d'onde de fentes traversantes parallèles. L'ensemble formé par ce réseau et la lame guide d'onde constitue un résonateur ayant un comportement de filtre passe-bande autour de la longueur d'onde λ₀.

L'amplitude maximale du taux de transmission à la longueur d'onde λ₀ augmente avec la largeur des fentes. Par contre, comme le montre la figure 6 du brevet US8937277B1, plus la largeur des fentes est grande, plus le taux de réjection en dehors de la bande passante se dégrade. De plus, plus la largeur des fentes est grande et plus la largeur de la bande passante du dispositif de filtrage optique augmente. Ainsi, la sélectivité de ce dispositif de filtrage optique se dégrade au fur et à mesure que la largeur des fentes augmente. A cause de cela, dans les dispositifs de filtrage optique connus, il est admis que le meilleur compromis est obtenu lorsque la largeur des fentes est systématiquement choisie inférieure à P/3, où P est la périodicité des fentes. Toutefois, même en respectant cette contrainte, il est difficile d'obtenir un taux de transmission élevé tout en conservant un taux de réjection élevé et une sélectivité élevée.

D'autres dispositifs de filtrage sont connus de FR3007148A1, WO2018/185265A1 et WO2007/118895A1. Les dispositifs de filtrage divulgués dans ces documents ne présentent pas des taux de transmission élevés.

L'invention vise à proposer un dispositif de filtrage optique qui permet d'augmenter le taux de transmission sans dégrader, voire même en améliorant, le taux de réjection et la sélectivité.

A cet effet, l'invention a pour objet un dispositif de filtrage optique conforme à la revendication 1.

L'invention a également pour objet un appareil réglable de filtrage optique et un détecteur mettant en oeuvre le dispositif ci-dessus de filtrage optique.

La présente invention sera mieux comprise à la lecture de la description qui va suivre, donnée uniquement à titre d'exemple, et réalisée en relation avec les dessins annexés dans lesquels :
- la figure 1 est une vue schématique, en coupe verticale, d'un premier mode de réalisation d'un dispositif de filtrage optique,
- la figure 2 est une vue en perspective d'un exemple de structure d'un filtre optique mono-fréquentiel du dispositif de la figure 1 ;
- la figure 3 est un tracé de la réponse en transmission du dispositif de la figure 1 et du filtre de la figure 2 ;
- la figure 4 est un tracé de la réponse en transmission du dispositif de la figure 1 pour différentes épaisseurs d'une couche intermédiaire ;
- la figure 5 est un organigramme d'un premier procédé de fabrication du dispositif de la figure 1;
- les figures 6 à 9 sont des illustrations schématiques, en coupe verticale, de différents états de fabrication obtenus lors de la mise en oeuvre du procédé de la figure 5;
- la figure 10 est un organigramme d'un second procédé de fabrication du dispositif de la figure 1;
- les figures 11 à 14 sont des illustrations schématiques, en coupe verticale, de différents états de fabrication obtenus lors de la mise en oeuvre du procédé de la figure 10;
- la figure 15 est une vue, en coupe verticale d'un deuxième mode de réalisation d'un dispositif de filtrage optique,
- la figure 16 est un tracé de la réponse en transmission des dispositifs des figures 1 et 15,
- la figure 17 est une vue, en coupe verticale, d'un troisième mode de réalisation d'un dispositif de filtrage optique,
- la figure 18 est une illustration schématique d'un appareil réglable de filtrage optique,
- la figure 19 est une illustration schématique, en coupe verticale, d'un détecteur incorporant un réseau de dispositifs de filtrage optique.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont présentés dans un chapitre III.

### Chapitre I : Exemples de modes de réalisation détaillés

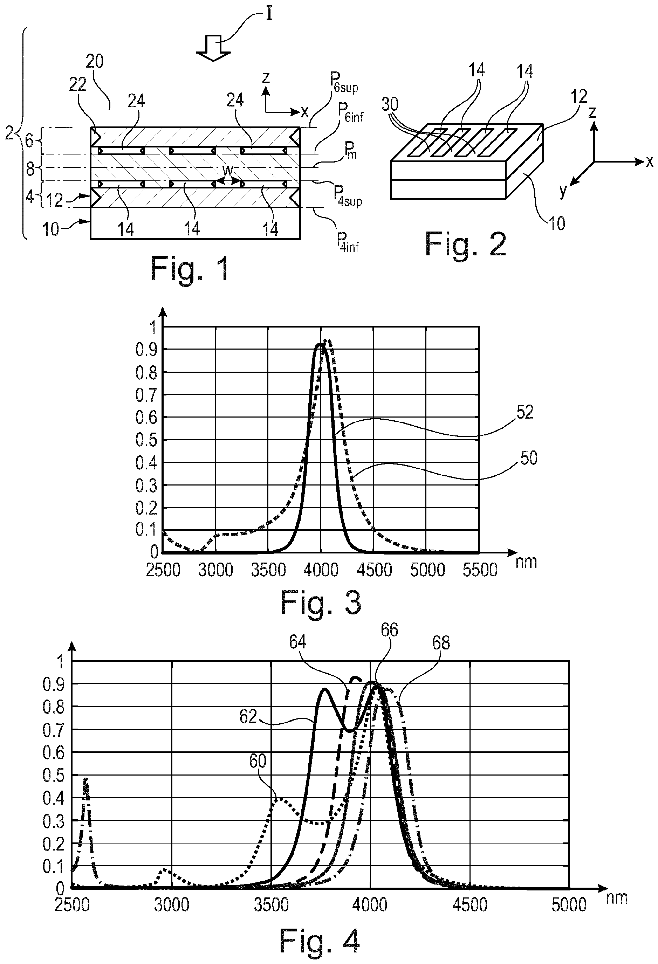

La figure 1 représente un dispositif 2 de filtrage optique. La réponse en transmission du dispositif 2 présente un seul pic de transmission correspondant à un taux de transmission élevé. Dans cette demande, un taux de transmission est dit "élevé" s'il dépasse 80% ou 85%. Ce taux de transmission élevé est obtenu pour une longueur d'onde λ₀. De part et d'autre du pic de transmission, le dispositif 2 présente un taux de réjection élevé, c'est-à-dire un taux de réjection supérieur à 95% ou 99%, voire même supérieur à 99,9%. Ce taux de réjection élevé est observé sur des plages de longueurs d'onde situées à droite et à gauche du pic de transmission. Ces plages s'étendent chacune sur une largeur supérieure à λ₀/2.

Dans ce premier mode de réalisation, le pic de transmission du dispositif 2 est dans le moyen infrarouge, c'est-à-dire entre une longueur d'onde de 3 µm et une longueur d'onde de 5 µm. Ici, la longueur d'onde λ₀ est égale à 4 µm.

Le dispositif 2 comporte deux filtres optiques monodirectionnels 4 et 6 disposés l'un au-dessus de l'autre dans une direction verticale et séparés l'un de l'autre par une couche intermédiaire 8.

Dans la figure 1 ainsi que dans les figures suivantes, l'orientation dans l'espace est repérée par rapport à un repère orthogonal XYZ. La direction Z est la direction verticale. Les directions X et Y sont contenues dans un plan horizontal. La direction X est parallèle au plan de coupe du dispositif 2. Par la suite, les termes tels que "haut", "bas", "au-dessus", "au-dessous", "supérieur", "inférieur" et similaires sont définis par rapport à la direction Z.

Le filtre 4 est situé au-dessous du filtre 6 et réalisé sur la face supérieure d'un milieu diélectrique 10. Le milieu 10 présente un indice de réfraction n₁₀ à la longueur d'onde λ₀ et une épaisseur h₁₀ dans la direction verticale. Ici, le milieu 10 est un substrat solide non métallique.

La direction du rayonnement électromagnétique incident est représentée par une flèche I sur la figure 1. Le rayonnement électromagnétique incident se propage verticalement de haut en bas. Dans ce mode de réalisation, le rayonnement électromagnétique incident présente une polarisation TM ("Transverse Magnétique") avec le champ électrique dans le plan XZ.

Le filtre 4 présente un très haut pic de transmission autour de la longueur λ₀. Ici, le taux maximal de transmission du filtre 4 est supérieur à 90%. A cet effet, le filtre 4 est conçu conformément à l'enseignement du brevet US8937277B2 sauf que la largeur w des fentes n'est pas nécessairement choisie inférieure à P/3. Dans cet exemple de mode de réalisation, la largeur w est choisie supérieure à P/3 mais inférieure à 2P/3.

Le filtre 4 s'étend principalement horizontalement. Dans la direction verticale, il s'étend depuis un plan limitrophe inférieur P_{4inf} jusqu'à un plan limitrophe supérieur P₄ₛᵤₚ. Les plans P_{4inf} et P₄ₛᵤₚ sont horizontaux. Les plans P_{4inf} et P₄ₛᵤₚ sont situés à l'interface entre le filtre 4 et des milieux extérieurs de bas indices de réfraction situés, respectivement, au-dessous du plan P_{4inf} et au-dessus du plan P₄ₛᵤₚ. Le milieu de bas indice de réfraction situé sous le plan P_{4inf} est le milieu 10. Le milieu de bas indice de réfraction situé au-dessus du plan P₄ₛᵤₚ est la couche 8.

De façon similaire, le filtre 6 s'étend depuis un plan limitrophe inférieur P_{6inf} jusqu'à un plan limitrophe supérieur P₆ₛᵤₚ. Les plans P_{6inf} et P₆ₛᵤₚ sont ici les symétriques, respectivement, des plans P₄ₛᵤₚ et P_{4inf} par rapport à un plan horizontal médian Pₘ. Le plan Pₘ est le plan médian de la couche 8. Il est situé à mi-hauteur de la couche 8. Comme les plans P_{4inf} et P₄ₛᵤₚ, les plans P_{6inf} et P₆ₛᵤₚ sont situés à l'interface entre le filtre 6 et des milieux extérieurs de bas indices de réfraction. Ici, le milieu de bas indice de réfraction situé sous le plan P_{6inf} est la couche 8. Le milieu de bas indice de réfraction situé au-dessus du plan P₆ₛᵤₚ est un milieu 20.

En partant du plan P_{4inf} et en allant vers le plan P₄ₛᵤₚ, le filtre 4 comporte successivement directement déposés l'un sur l'autre :
- une lame 12 disposée sur une face horizontale supérieure du milieu 10, cette lame présentant un indice de réfraction n₁₂ à la longueur d'onde λ₀ et une épaisseur h₁₂ dans la direction verticale, et
- des éléments réflecteurs 14 déposés sur une face supérieure horizontale de la lame 12 située du côté opposé au milieu 10.

Le filtre 6 présente un très haut pic de transmission autour de la longueur λ₀. A cet effet, il est structurellement identique au filtre 4 sauf que la lame et les éléments réflecteurs sont disposés dans l'ordre inverse. Ainsi, le filtre 6 comporte successivement déposés l'un sur l'autre en allant du plan P₆ₛᵤₚ vers le plan P_{6inf} :
- une lame 22 comportant une face horizontale supérieure directement en contact avec le milieu 20, cette lame présentant un indice de réfraction n₂₂ à la longueur d'onde λ₀ et une épaisseur h₂₂ dans la direction verticale, et
- des éléments réflecteurs 24 déposés sur une face inférieure horizontale de la lame 22 située du côté opposé au milieu 20.

Dans ce mode de réalisation, le milieu 20 est un milieu gazeux dont l'indice n₂₀ de réfraction à la longueur d'onde λ₀ est inférieur à l'indice n₂₂ et, de préférence, inférieur à 3n₂₂/5 ou inférieur à 1,5. Par exemple, le milieu 20 est de l'air. L'air est particulièrement avantageux car il présente un indice de réfraction proche de 1.

La lame 22 est identique à la lame 12 et remplit la même fonction. La lame 22 est le symétrique de la lame 12 par rapport au plan Pₘ.

Les éléments réflecteurs 24 sont identiques aux éléments réflecteurs 14. De plus, ils sont agencés les uns par rapport aux autres de la même manière que les éléments réflecteurs 14. Dans ce mode de réalisation, les éléments réflecteurs 24 sont les symétriques des éléments réflecteurs 14 par rapport au plan Pₘ.

La couche 8 est réalisée dans un matériau diélectrique présentant un indice de réfraction n₈ à la longueur d'onde λ₀. L'indice de réfraction n₈ est faible, c'est-à-dire inférieur 3n₁₂/5 et, de préférence, inférieur à 1,5. L'épaisseur de la couche 8 est notée h₈. La couche 8 s'étend du plan P₄ₛᵤₚ jusqu'au plan P_{6inf}. L'épaisseur h₈ est donc égale à la distance qui sépare les plans P₄ₛᵤₚ et P_{6inf}. Cette épaisseur h₈ est choisie pour créer un couplage modéré entre les champs évanescents générés par les filtres 4 et 6. Un tel choix de l'épaisseur h₈ est expliqué en détail plus loin.

Le filtre 4 est maintenant décrit plus en détail en référence à la figure 2.

La lame 12 est transparente à la longueur d'onde λ₀ et forme un guide d'onde et, de préférence, une lame demi-onde. Pour cela, la lame 12 est réalisée dans un matériau diélectrique de fort indice de réfraction. L'expression "un élément réalisée dans un matériau X" signifie que ce matériau X représente au moins 90% ou 95% de la masse de l'élément X. Dans ce contexte, un "fort indice de réfraction", signifie que l'indice n₁₂ est supérieur aux indices n₁₀ et n₈ et, de préférence, supérieur à 5n₁₀/3 et à 5n₈/3.

De plus, l'épaisseur h₁₂ de la lame 12 est choisie pour former une lame demi-onde dans une gamme de longueurs d'onde comprenant la longueur d'onde λ₀ et ainsi obtenir une résonance électromagnétique dans la lame 12. Typiquement, l'épaisseur h₁₂ est comprise entre 0,8λ₀/(2n₁₂) et 1,2λ₀/(2n₁₂). De préférence, l'épaisseur h₁₂ est choisie légèrement inférieure à λ₀/(2n₁₂). Ceci permet de rendre la réponse spectrale meilleure que si la stricte loi λ₀/(2n₁₂) du mode guidé seule est respectée. Une résonance électromagnétique est ainsi obtenue dans la lame 12.

Les éléments réflecteurs 14 sont réalisés dans un matériau dont la permittivité électrique est négative à la longueur d'onde λ₀. Ici, les éléments réflecteurs 14 sont réalisés en métal et, dans cet exemple, en aluminium. Les éléments réflecteurs 14 définissent un réseau périodique de fentes 30 destiné à être traversé par le rayonnement électromagnétique incident. De préférence, le nombres de fentes 30 est supérieur à λ₀/Δλ, où Δλ est la largeur à mi-hauteur du pic de transmission à la longueur d'onde λ₀. Le réseau de fentes 30 est formé sur la face supérieure de la lame 12. Les fentes 30 débouchent sur la face supérieure de la lame 12. Les caractéristiques des fentes 30 sont choisies de manière à ce que le réseau présente une sélectivité en transmission autour de la longueur d'onde λ₀. De préférence, l'épaisseur hₘₑₜ des éléments réflecteurs 14 dans la direction verticale est faible, c'est-à-dire inférieure à 50 nm ou 100 nm. L'épaisseur hₘₑₜ est aussi supérieure à l'épaisseur de peau pₘₑₜ(λ₀), à la longueur d'onde λ₀, du matériau utilisé pour réaliser les éléments réflecteurs 14. Typiquement, l'épaisseur hₘₑₜ est comprise entre pₘₑₜ(λ₀) et 5pₘₑₜ(λ₀).

Ici, les éléments 14 sont des bandes qui s'étendent continûment dans la direction Y et qui sont déposées sur la lame 12. Les éléments 14 forment un seul réseau périodique de fentes s'étendant continûment dans la direction Y, de période P., Dans cet exemple, la propriété de filtrage optique d'intérêt est celle obtenue lorsque la polarisation du rayonnement électromagnétique incident I est une polarisation rectiligne dite transverse magnétique, c'est-à-dire avec un champ électrique dans le plan XZ et un champ magnétique parallèle à la direction Y.

La période P est égale à la somme de la largeur L d'un élément 14 et de la largeur w d'une fente 30. La période P est choisie pour satisfaire la condition suivante : λ₀/n₁₂≤P≤ 2λ₀/n₁₂.

La largeur w des fentes 30 est choisie pour obtenir un taux de transmission maximal supérieur à 90%. A cet effet, la largeur w est généralement choisie entre P/3 et 2P/3. En choisissant les paramètres du filtre 4 selon les principes exposés ci-dessus, on obtient un filtre 4 isolé présentant :
- un très haut pic de transmission, et
- un pic de transmission de faible largeur, à savoir inférieure à 10% de la longueur d'onde du maximum du pic de transmission.

Par contre, étant donné que la largeur w est choisie supérieure à P/3, les taux de réjection à droite et à gauche du pic de transmission sont assez mauvais. Par exemple, ils sont inférieurs à 90% sur une plage spectrale [0,75λ₀ ; 1,25λ₀].

Pour un fonctionnement optimal du filtre 4, les éléments réflecteurs 14 sont disposés dans un milieu d'indice de réfraction inférieur à 1,5. Ici, ce milieu est la couche 8.

Le mode de propagation de l'onde électromagnétique qui résonne dans chacune des lames 12 et 22, est associé à un champ évanescent qui décroît exponentiellement dans la couche intermédiaire 8. L'amplitude du champ évanescent décroît dans la couche 8 selon une loi approximée par la relation suivante : Aₑ = exp(-|z|/δ), où :
- Aₑ est l'amplitude du champ évanescent à une distance z de la lame 12 à l'intérieur de la couche 8,
- δ est un coefficient défini par la relation suivante : 1/δ = (2πn₈/λ₀)((λ₀/(n₈P))²-1)^{0,5}, où P est la période du réseau de fentes,
- le symbole "exp" est la fonction exponentielle.

Le coefficient δ définit ainsi une longueur d'extension caractéristique du champ évanescent. Par exemple, quand z = δ, l'amplitude du champ évanescent a perdu environ un tiers de sa valeur. Si z est supérieur à 4δ, alors l'amplitude du champ évanescent est pratiquement nulle et il n'existe donc pratiquement aucun couplage entre les champs évanescents rayonnés par les lames 12 et 22. Il a été déterminé qu'un couplage modéré des champs évanescents généré par les lames 12 et 22 se produit à l'intérieur de la couche 8 lorsque l'épaisseur h₈ est comprise entre δ et 3δ. Ici, l'épaisseur h₈ est choisie entre 1,25δ et 2,75δ ou entre 1,5δ et 2,5δ ou entre 1,9δ et 2,1δ. Dans ce mode de réalisation, l'épaisseur h₈ est égale à 2δ. Le choix de cette épaisseur h₈ est justifié par les résultats expérimentaux ci-dessous.

La figure 3 représente sur un même graphe la réponse en transmission du filtre 4 isolé (courbe 50) et la réponse en transmission du dispositif 2 (courbe 52). L'axe des abscisses indique la longueur d'onde en nanomètre et l'axe des ordonnées indique le taux de transmission correspondant exprimé entre 0 et 1, où la valeur 1 correspond à un taux de transmission de 100%. Les courbes représentées sur la figure 3 ont été obtenues par simulation avec les valeurs numériques suivantes et une polarisation TM du rayonnement incident :
- P = 1,6 µm,
- w = 0,6 µm,
- hₘₑₜ = 20 nm,
- les éléments réflecteurs 14 et 24 sont réalisés en aluminium,
- les indices de réfractions n₁₂ et n₂₂ sont égaux à 4, ce qui correspond au cas où les lames 12 et 22 sont réalisées en germanium,
- les indices de réfraction n₁₀, n₈ et n₂₀ sont égaux à 1, ce qui correspond à un cas idéal.

Avec ces valeurs numériques, le coefficient δ est égal à 277 nm. Ainsi, pour obtenir un couplage modéré des champs évanescents, l'épaisseur h₈ doit être choisie entre 346 nm et 761 nm. Pour la simulation de la figure 3, l'épaisseur h₈ est égale à 550 nm.

L'amplitude maximale du pic de transmission du filtre 4 isolé est très élevée et atteint 94% pour la longueur d'onde égale à 4,07 µm. L'amplitude maximale du taux de transmission du dispositif 2 est aussi très élevé puisqu'il atteint 92% pour la longueur d'onde égale à 3,98 µm. L'amplitude maximale du pic de transmission du dispositif 2 est supérieure à l'amplitude maximale qu'on obtient en la calculant par convolution des réponses en transmission des filtres isolés 4 et 6. En effet, ce calcul donne une amplitude maximale égale à 88,3% (=0,94²). Ainsi, l'amplitude maximale du pic de transmission du dispositif 2 est meilleure que celle qui serait obtenue en absence de couplage modéré des champs évanescents des filtres 4 et 6.

Le taux de réjection à droite et gauche du pic de transmission du filtre 4 isolé est inférieur à 90%. Contrairement au filtre 4 isolé, le taux de réjection à droite et à gauche du pic de transmission du dispositif 2 est très élevé et reste supérieur à 99%. Par exemple, le taux de réjection est égal à 87,4% à la longueur d'onde égale à 3,5 µm pour le filtre 4 isolé alors qu'il est égal à 99,4 % pour le dispositif 2.

Ainsi, le dispositif 2 présente à la fois un taux de transmission très élevé et un taux de réjection très élevé en dehors du pic de transmission.

La longueur d'onde de résonance du dispositif 2 est aussi un peu décalée par rapport à celle du filtre 4 isolé.

Ce résultat est expliqué par le fait que les champs évanescents générés dans la couche 8 par les filtres 4 et 6 se recouvrent et interfèrent. Cette interférence est constructive pour les longueurs d'onde correspondant au pic de transmission. Ainsi, une partie de l'énergie qui n'aurait normalement pas due être transmise au loin par un filtre isolé, est transférée du filtre 6 au filtre 4 via leurs champs évanescents. Cela explique pourquoi, avec un couplage modéré des champs évanescents, le taux de transmission du dispositif 2 est supérieure au simple carré des hauteurs des pics de transmission des filtres isolés.

A l'inverse, cette interférence des champs évanescents dans la couche 8 est destructive en dehors du pic de transmission. Cela explique pourquoi le taux de réjection du dispositif 2 s'avère également meilleur que le simple carré des taux de réjection des filtres 4 et 6 isolés.

Si l'épaisseur h₈ est choisie inférieure à δ, alors le couplage des champs évanescents des filtres 4 et 6 dans la couche 8 est fort et non plus modéré. Il a aussi été déterminé qu'un couplage fort déforme complètement le pic de transmission et dégrade le taux de transmission et la sélectivité du dispositif 2. Ceci est illustré sur la figure 4. Le graphe de la figure 4 représente les réponses en transmission du dispositif 2 obtenues par simulation pour différentes épaisseurs h₈. Pour ces simulations, les autres valeurs numériques qui caractérisent le dispositif 2 sont égales à celles utilisées pour obtenir le graphe de la figure 3. Plus précisément, les courbes 60, 62, 64, 66 et 68 ont été obtenues pour des valeurs de l'épaisseur h₈ égales, respectivement, à 50 nm, 200 nm, 400 nm, 600 nm et 1200 nm.

Les courbes 60 et 62 correspondent à un couplage fort des champs évanescents. Il peut être observé qu'un tel couplage fort scinde en au moins deux le pic de transmission se qui dégrade la sélectivité du dispositif 2 ainsi que le taux de réjection en dehors du pic de transmission.

A l'inverse, si l'épaisseur h₈ est choisie supérieure à 3δ, le couplage entre les champs évanescents générés est très faible de sorte que l'amélioration du taux de transmission par rapport au cas où les filtres isolés 4 et 6 ne seraient pas couplés l'un à l'autre par l'intermédiaire de leurs champs évanescents est négligeable ou inexistante. Ceci est illustré par la courbe 68 de la figure 4. De plus, en absence de couplage entre les champs évanescents des filtres 4 et 6, un pic de transmission parasite apparaît. Sur le graphe de la figure 4, ce pic de transmission parasite apparaît dans la courbe 68 autour d'une longueur d'onde égale à 2,6 µm.

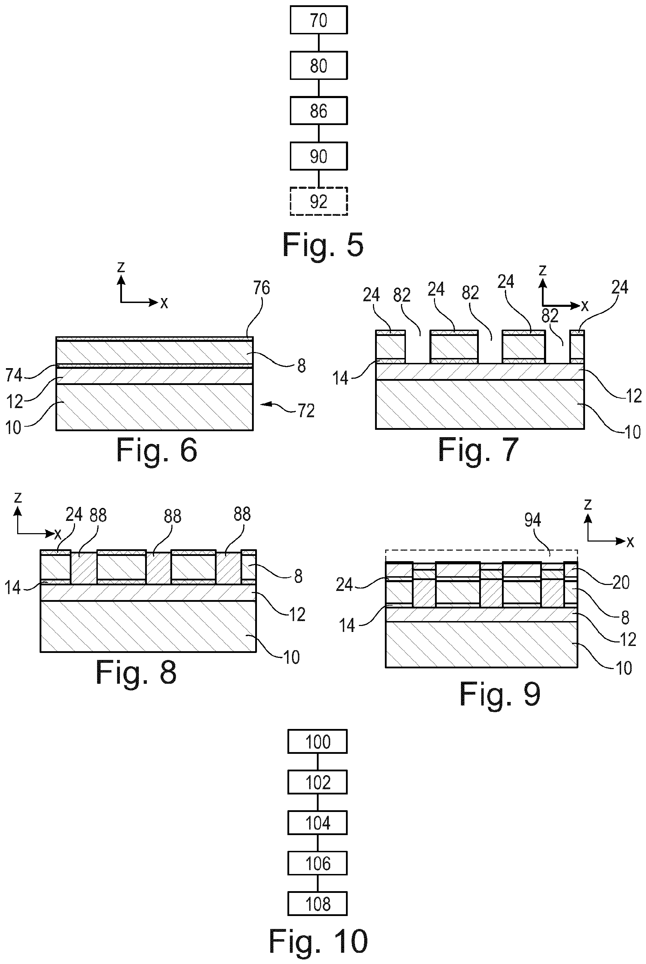

Un exemple de procédé de fabrication du dispositif 2 va maintenant être décrit en référence aux figures 5 à 9.

Initialement, lors d'une étape 70, une pile 72 (Figure 6) de plusieurs couches est fournie. Cette pile 72 comporte successivement en partant du bas vers le haut :
- le milieu 10,
- la lame 12,
- une couche 74 de métallisation en aluminium,
- la couche intermédiaire 8, et
- une couche 76 de métallisation en aluminium.

L'épaisseur des couches 74 et 76 est égale à l'épaisseur hₘₑₜ. La face supérieure de la couche 76 est directement exposée à l'extérieur.

Ici, le milieu 10 et la couche 8 sont en oxyde de silicium amorphe dont l'indice de réfraction est d'environ 1,4 pour une longueur d'onde λ₀ égale à 4 µm. La lame 12 est réalisée en silicium amorphe dont l'indice de réfraction est d'environ 3,84 pour la longueur d'onde λ₀.

Lors d'une étape 80, la pile 72 est gravée pour réaliser les éléments réflecteurs 14 et 24 dans les couches, respectivement, 74 et 76. Pour cela des tranchées 82 (Figure 7) verticales sont creusées à partir de la face extérieure de la couche 76 et s'arrêtent sur la face supérieure de la lame 12. Chacune de ces tranchées 82 traverse successivement la couche 76, la couche 8 et la couche 74.

Lors d'une étape 86, les tranchées 82 sont comblées avec un matériau diélectrique 88 dont l'indice de réfraction est faible (Figure 8). Par exemple le matériau 88 est de l'oxyde de silicium. Puis, la face supérieure est polie, par exemple par un procédé de polissage mécano-chimique, pour la rendre plane et mettre à nue la face supérieure des éléments réflecteurs 24.

Lors d'une étape 90, la lame 22 est déposée sur la face mise à nue des éléments réflecteurs 24 précédemment réalisés (Figure 9).

Éventuellement, lors d'une étape 92, un revêtement 94 (Figure 9) est déposé sur la face supérieure de la lame 24. Par exemple, le revêtement 94 est une couche de protection ou une couche anti-reflet.

Un autre procédé de fabrication du dispositif 2 va maintenant être décrit en référence aux figures 10 à 14.

Ce procédé débute par la fourniture, lors d'une étape 100, d'une pile identique à la pile 72 sauf que les couches 8 et 76 sont omises.

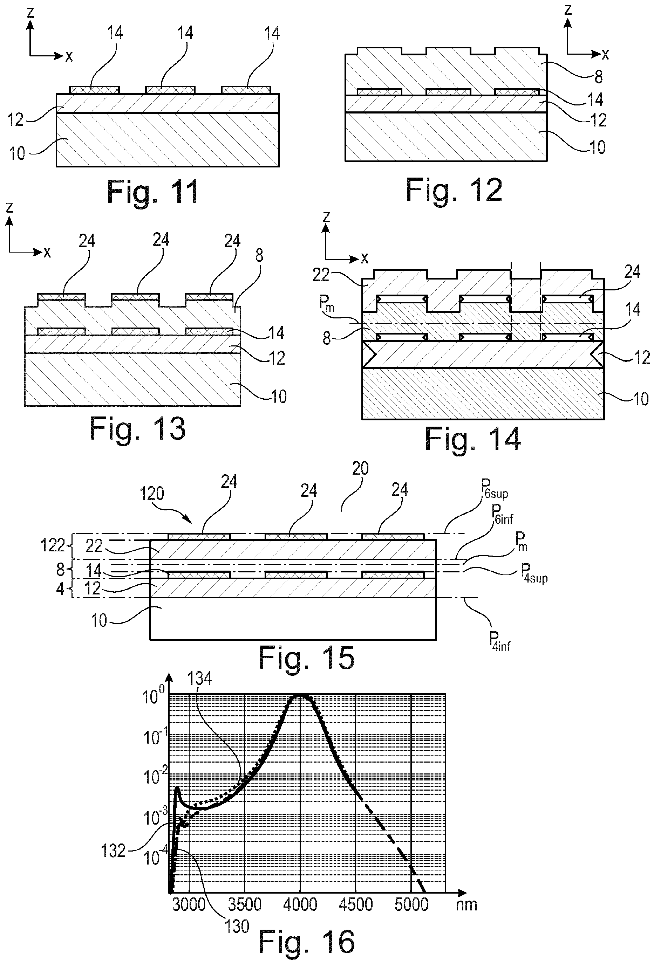

Lors d'une étape 102, la couche 74 de métallisation est gravée pour former les éléments réflecteurs 14 sur la face supérieure de la lame 12 (Figure 11).

Ensuite, lors d'une étape 104, la couche intermédiaire 8 est déposée sur les éléments réflecteurs 14 (Figure 12). Étant donné que les éléments réflecteurs 14 sont séparés les uns des autres par des fentes, la face sur laquelle est déposée la couche 8 n'est pas plane. Il en résulte que la face supérieure de la couche 8 après son dépôt n'est pas plane non plus. Elle présente des aspérités en vis-à-vis de chaque élément réflecteur 14.

Lors d'une étape 106, les éléments réflecteurs 24 sont réalisées sur la face supérieure de la couche 8. Dans ce mode de réalisation, la face supérieure de la couche 8 n'est pas polie avant de réaliser les éléments réflecteurs 24. Par exemple, les éléments réflecteurs 14 sont réalisées par dépôt d'une couche de métallisation sur la face supérieure de la couche 8 puis par gravure de cette couche de métallisation.

Enfin, lors d'une étape 108, la lame 22 est déposée sur les éléments réflecteurs 24 (Figure 14). Par exemple, comme pour le dépôt de la couche 8, puisque la lame 22 est déposée sur une face qui n'est pas plane, sa face supérieure comporte des aspérités en vis-à-vis de chacun des éléments réflecteurs 24. Ici, à cause de ces aspérités sur la face supérieure de la lame 22, la lame 22 n'est pas exactement le symétrique de la lame 12 par rapport au plan Pₘ. Toutefois, il a été observé que même dans ce mode de réalisation, le dispositif de filtrage optique obtenu présente un taux de transmission élevé et des taux de réjection élevés de part et d'autre du pic de transmission.

La figure 15 représente un dispositif 120 de filtrage optique identique au dispositif 2 sauf que le filtre 6 est remplacé par un filtre optique 122. Le filtre 122 est identique au filtre 6 sauf que l'ordre dans lequel la lame 22 et les éléments réflecteurs 24 sont empilés l'un sur l'autre est inversé. Autrement dit, dans ce mode de réalisation, la face inférieure de la lame 22 affleure le plan P_{6inf} et les éléments réflecteurs 24 sont disposés sur la face supérieure de la lame 22 en contact avec le milieu 20.

La figure 16 représente la réponse en transmission du dispositif 2 (courbe 130) et du dispositif 120 (courbe 132). Sur ce graphe, l'échelle de l'axe des ordonnées est logarithmique. Il peut être observé que l'amplitude maximale du pic de transmission du dispositif 2 est légèrement supérieure à l'amplitude maximale du pic de transmission du dispositif 120. Ici, un écart d'environ 1,6 % est observé. De même, le dispositif 2 présente un taux de réjection légèrement supérieur à celui du dispositif 120. Toutefois, bien que les performances du dispositif 120 soient un peu inférieures à celles du dispositif 2, les taux de transmission et de réjection obtenus avec le dispositif 120 restent bien meilleurs que ceux obtenus avec le filtre 4 isolé ou avec une superposition des filtres 4 et 6 mais sans couplage modéré de leurs champs évanescents.

Le graphe de la figure 16 comporte aussi une courbe 134 qui correspond à un dispositif de filtrage optique identique au dispositif 2 sauf que les éléments réflecteurs 24 sont décalés, par exemple dans la direction X, d'un pas égal à P/4. Comme pour le dispositif 120, les performances de ce mode de réalisation sont un peu inférieures à celles du dispositif 2 mais les taux de transmission et de réjection obtenus restent bien meilleurs que ceux obtenus avec le filtre 4 isolé ou avec la superposition des filtres 4 et 6 mais sans couplage modéré de leurs champs évanescents.

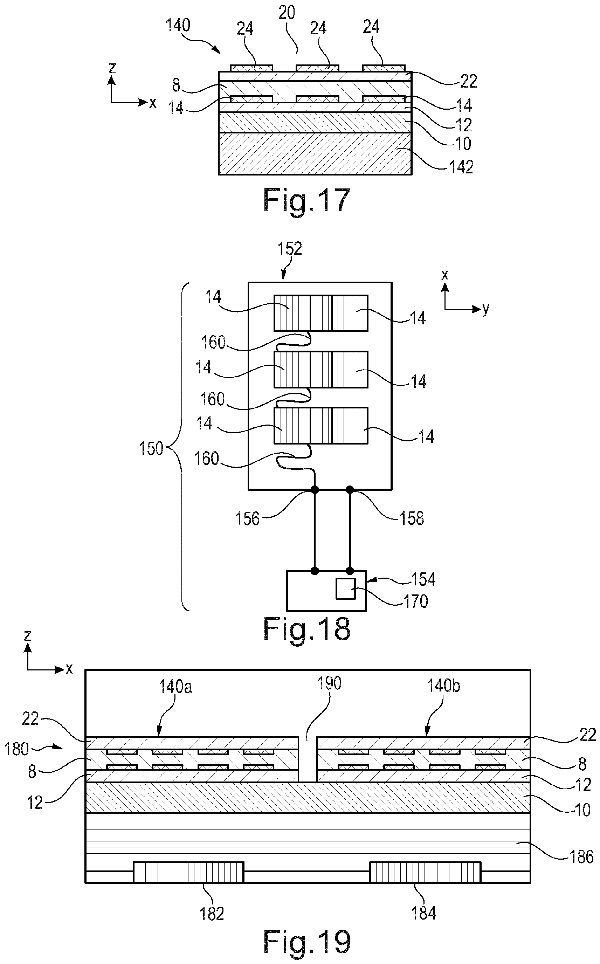

La figure 17 représente un dispositif 140 de filtrage optique. Le dispositif 140 est identique au dispositif 120 sauf que le milieu 10 est déposé sur un support 142 qui présente un indice de réfraction n₁₄₂ élevé. L'indice n₁₄₂ est supérieur à 1,5 ou à 2. Par exemple, le support 142 est réalisé en silicium ou en germanium. Dans ce cas, le milieu 10 forme, de préférence, une lame quart d'onde. Pour cela, l'épaisseur h₁₀ du milieu 10 est choisie entre 0,9Mλ₀/(4n₁₀) et 1,1Mλ₀/(4n₁₀), où M est un nombre entier impair choisi à l'avance. Ici l'épaisseur h₁₀ est égale à Mλ₀/(4n₁₀).

La figure 18 représente un appareil réglable 150 de filtrage optique. L'appareil 150 comporte un dispositif 152 de filtrage optique et une source 154 de tension. Le dispositif 152 est, par exemple, identique au dispositif 2 sauf qu'il comporte deux bornes de raccordement 156 et 158. Tous les éléments réflecteurs 14 sont électriquement raccordés à la borne 156. Tous les éléments réflecteurs 24 sont électriquement raccordés à la borne 158. Les éléments réflecteurs 14 et la borne 156 sont électriquement isolés des éléments réflecteurs 24 et de la borne 158.

Pour simplifier la figure 18, seuls les éléments réflecteurs 14 sont représentés. Ici, les éléments réflecteurs 14 sont raccordés électriquement les uns aux autres par l'intermédiaire de fils 160 très fins. Par exemple, la largeur de ces fils 160 est inférieure à 150 nm ou 100 nm. Ici, la largeur des fils 160 est égale à 100 nm. Au moins un de ces fils 160 raccorde électriquement les éléments 14 à la borne 156.

Les éléments réflecteurs 24 sont raccordés à la borne 158 de façon similaire à ce qui a été décrit pour les éléments réflecteurs 14. Ainsi, lorsqu'une différence de potentiels est générée entre les bornes 156 et 158, un champ électrique est généré dans la couche intermédiaire 8.

Dans ce mode de réalisation, la couche intermédiaire 8 est réalisée dans un matériau diélectrique qui est, en plus, un matériau électro-optique, c'est-à-dire un matériau dont on peut modifier l'indice de réfraction sous l'effet d'un champ électrique statique ou basse fréquence. Notamment, un des effets non-linéaires le plus connu est l'effet Pockels où le changement d'indice est directement proportionnel au champ électrique traversant. Dans ce cas, la variation Δn₈ d'indice n₈ de réfraction peut s'exprimer comme Δn₈= n₈³×R×E, où :
- R est un coefficient électro-optique caractéristique du matériau utilisé pour réaliser la couche 8,
- E est l'amplitude du champ électrique qui traverse la couche 8, et
- le symbole "x" désigne l'opération de multiplication scalaire.
Pour des matériaux polymères organiques, d'indice de réfraction compris entre 1,6- et 1,8, chargés en chromophores, le coefficient R peut être de l'ordre de 100 pm/V, voire plus. A titre d'exemple, un tel matériau polymère est du PMMA (Polyméthacrylate de méthyle). Si U est la différence de potentielle appliquée entre les deux bornes 156 et 158, l'amplitude E du champ électrique dans la couche 8 est égale à U/h₈. Des chromophores susceptibles d'être utilisés pour réaliser le matériau électro-optique sont par exemple cités dans l'article suivant : J. LIU et AI : "Recent advances in polymer electro-optic modulators", RSC Adv., 2015,5, 15784-15794.

La source 154 est électriquement raccordée entre les bornes 156 et 158. Elle est apte à générer une différence de potentiels entre ces bornes 156 et 158. Ici, la source 154 comporte un module 170 de réglage de la différence de potentiels entre les bornes 156 et 158.

Dès lors, en ajustant la différence de potentiels entre les bornes 156 et 158 à l'aide du module 170, il est possible possible de modifier certaines caractéristiques du dispositif 152 comme, par exemple, la position de son pic de transmission ou la modulation de son amplitude. Par exemple, avec une hauteur h₈ égale à 500 nm, une différence U de potentiels égale à 50 Vdc et un coefficient R égal à 100 pm/V, la variation Δn₈ de l'indice n₈ de réfraction est égale à 0,1.

La figure 19 représente un détecteur 180 multi-pixels. Ce détecteur 180 comporte une matrice de cellules de détection du rayonnement électromagnétique incident. Ici, chacune de ces cellules est formée par une diode détectrice réalisée dans un substrat semiconducteur 186. Pour simplifier la figure 19, seules deux diodes détectrices 182 et 184 sont représentées. Les jonctions de ces diodes 182, 184 sont réalisées dans ce substrat 186.

Un dispositif de filtrage optique est placé devant chacune de ces diodes. Ici, ce dispositif de filtrage est, par exemple, identique au dispositif 140 sauf que le support 142 est remplacé par le substrat 186. Les dispositifs de filtrage optique situés devant les diodes 182, 184 portent les références numériques, respectivement, 140a et 140b.

Dans ce mode de réalisation, le substrat 186 et le milieu 10 est commun à tous les dispositifs de filtrage optique. Le substrat 186 et le milieu 10 s'étendent donc horizontalement et continûment devant chacune des diodes détectrices.

Une tranchée 190 est creusée le long de la périphérie de chacun des dispositifs 140a et 140b afin de minimiser les interférences entre ces différents dispositifs de filtrage optique. Par exemple, la tranchée 190 sépare les lames 12, 22 et la couche intermédiaire 8 de chacun des dispositifs de filtrage des lames 12, 22 et de la couche intermédiaire 8 des dispositifs de filtrage situés immédiatement à côté.

De plus, si nécessaire, les caractéristiques du dispositif 140a peuvent être différentes des caractéristiques du dispositif 140b. Par exemple, la période P du dispositif 140a est différentes de la période P du dispositif 140b.

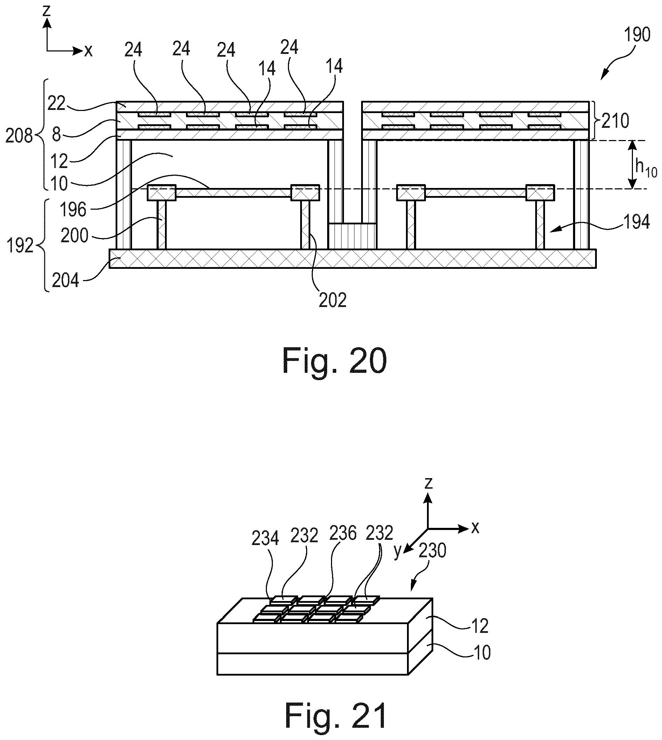

La figure 20 représente un autre détecteur multi-pixels 190 identique au détecteur 180 sauf que chaque cellule de détection est formée par un bolomètres de taille micrométrique. Pour simplifier la figure 20, seul deux bolomètres 192 et 194 identiques sont représentés. Chaque, bolomètre 192, 144 permet de mesurer l'énergie du rayonnement électromagnétique incident dans le domaine de l'infrarouge. De tels bolomètres sont connus et seuls les principaux détails de réalisation de ces bolomètres sont rappelés ici. Le bolomètre 192 comporte une membrane thermo-résistive 196 supportée par des piliers 200, 202, au-dessus d'un substrat réflecteur 204. Typiquement, la distance qui sépare le substrat 204 de la membrane 196 est égale ou environ égale au quart de la longueur d'onde à absorber. Ici, chaque bolomètre est encapsulé dans une cavité évidée pour l'isoler du milieu extérieur, comme l'explique notamment le brevet EP1243903B1. Les parois de cette cavité sont, par exemple, réalisées en silicium amorphe. Dans cet exemple, un dispositif de filtrage est réalisé au-dessus de chaque bolomètre. Ici, les dispositifs de filtrage situés au-dessus, respectivement, des bolomètres 192 et 194 portent les références numériques, respectivement, 208 et 210. Les dispositifs de filtrage 208 et 210 sont identiques, par exemple, au dispositif 2. Ici, le milieu 10 de chacun de ces dispositif de filtrage correspond au milieu remplissant l'intérieur de la cavité évidée à l'intérieur de laquelle se situe le bolomètre. Dans ce mode de réalisation, la lame 12 forme la paroi supérieure de la cavité évidée. Dans ces conditions, l'épaisseur h₁₀ du milieu 10 est égale à la distance séparant la lame 12 de la membrane 196 du bolomètre. Comme décrit précédemment, de préférence, l'épaisseur h₁₀ est comprise entre 0,9Mλ₀/(4n₁₀) et 1,1Mλ₀/(4n ₁₀), où M est un nombre entier impair choisi à l'avance. Typiquement, dans le cas d'un bolomètre, le milieu 10 est du vide.

La figure 21 représente un autre mode de réalisation possible d'un filtre bidimensionnel 230 susceptible d'être utilisé à la place des filtres 4 et 6. Le filtre 230 est identique au filtre 4 sauf que les éléments réflecteurs 14 sont remplacés par des éléments réflecteurs 232. Les éléments réflecteurs 232 sont identiques aux éléments réflecteurs 14 sauf qu'ils ont chacun une section horizontale rectangulaire et forme donc des plots alignés les uns derrière les autres dans les directions X et Y. Dans ce mode de réalisation, les éléments réflecteurs 232 sont agencés les uns par rapport aux autres de manière à définir deux réseaux périodiques de fentes 234 et 236 de largeurs respectives w₂₃₄ et w₂₃₆ et de périodes respectives P₂₃₄ et P₂₃₆. Ces deux réseaux sont orthogonaux entre eux. Dans ce cas, en prenant les périodes P₂₃₄ et P₂₃₆ égales et en prenant les largeurs w₂₃₄ et w₂₃₆ égales, le filtre 230 est insensible à la polarisation du rayonnement électromagnétique incident.

Lorsque le filtre 230 est utilisé à la place des filtres 4 et 6 pour former un dispositif de filtrage optique conçu en appliquant l'enseignement donné pour le dispositif 2, le taux de réjection, de part et d'autre du pic de transmission est amélioré. De préférence, pour cela, les largeurs w₂₃₄ et w₂₃₆ sont choisies relativement étroites, à savoir plutôt comprise entre P₂₃₄/5 à P₂₃₄/3. L'épaisseur des éléments réflecteurs 232 est de préférence voisine de 50 nm et inférieure à 100 nm. En effet, lorsque des filtres bidimensionnels sont utilisés à la place des filtres monodimensionnels, des pics secondaires parasites, liés à un autre mode guide d'onde transverse dans les lames 12 et 22, peuvent apparaître de part et d'autre du pic de transmission principal, et altérer alors le taux de réjection. Or l'excitation de ces pics secondaires est favorisée avec une trop grande largeur w₂₃₄. Ainsi, la largeur w₂₃₄ doit être adaptée pour obtenir un compromis acceptable entre le taux de réjection souhaité sur toute la plage spectrale d'étude et l'amplitude du pic de transmission souhaitée. Dans tous les cas, un dispositif de filtrage optique réalisé avec des filtres bidimensionnels permet d'obtenir des taux de réjection meilleurs que ceux obtenus avec le filtre 230 seul.

### Chapitre Il : Variantes :

### Variantes des éléments réflecteurs :

Dans un autre mode de réalisation du filtre 230, la projection orthogonale de l'élément réflecteur sur un plan horizontal est un parallélogramme et pas nécessairement un parallélogramme rectangle. La section horizontale des éléments réflecteurs n'est pas nécessairement carrée. Dans ce dernier cas, les périodes P₂₃₄ et P₂₃₆ ne sont pas égales. Si les périodes P₂₃₄ et P₂₃₆ ne sont pas égales, l'épaisseur h₈ est choisie comprise dans l'intersection des intervalles [1,25δ₂₃₄; 2,75δ₂₃₄] et [1,25δ₂₃₆; 2,75δ₂₃₆], où :
- le coefficient δ₂₃₄ est défini par la relation suivante : 1/δ₂₃₄ = (2πn₈/λ₀)((λ₀/(n₈P₂₃₄))²-1)^{0,5}, où P₂₃₄ est la période du réseau de fentes 234, et
- le coefficient δ₂₃₆ est défini par la relation suivante : 1/δ₂₃₆ = (2πn₈/λ₀)((λ₀/(n₈P₂₃₆))²-1)^{0,5}, où P₂₃₆ est la période du réseau de fentes 236.
Les périodes P₂₃₄ et P₂₃₆ sont suffisamment proches pour que l'intersection entre ces deux intervalles ne soit pas vide.

En variante, les éléments réflecteurs 24 ne sont pas nécessairement les symétriques des éléments réflecteurs 14. Par exemple, ils sont décalés, dans une direction horizontale quelconque d'une distance inférieure à la période P. Par exemple, les éléments réflecteurs 24 sont décalés, dans une direction horizontale, d'une distance égale à P/2 ou P/4. Dans ce cas, les éléments 24 sont agencés les uns par rapport aux autres comme les éléments 14 mais ne sont plus les symétriques des éléments 14 par rapport au plan Pₘ.

Dans une autre variante, les éléments réflecteurs sont déposés sur chacune des faces de la lame 12. Dans ce cas, la lame 12 comporte un premier réseau de fentes sur sa face inférieure et un second réseau de fentes sur sa face supérieure. De préférence, ces premier et second réseaux de fentes sont structurellement identiques. Par exemple, ils sont chacun identiques au réseau de fentes défini par les éléments réflecteurs 14 ou 232. De façon similaire, des éléments réflecteurs sont déposés sur chacune des faces de la lame 22 et les réseaux de fentes formés sur chacune des faces de la lame 22 sont identiques, respectivement, aux premier et second réseaux de fentes.

Les éléments réflecteurs peuvent être réalisés dans d'autres métaux que l'aluminium. Par exemple, ils sont réalisés en argent. L'aluminium et l'argent sont de bon choix, en particulier, pour la réalisation d'un dispositif de filtrage optique dont le pic de transmission est dans le domaine du visible, c'est-à-dire typiquement entre 400 nm et 800 nm. Toutefois d'autre métaux sont aussi utilisables comme l'or, le cuivre, le platine ou un alliage de ceux-ci.

Par ailleurs, les métaux peuvent être remplacés par tout matériau présentant des propriétés réflectrices similaires à celles des métaux dans la gamme de longueurs d'onde visée par le filtrage. Notamment, un matériau ayant une permittivité relative à haute partie imaginaire, à savoir de l'ordre de 10 ou plus, c'est-à-dire un matériau fortement conducteur ou fortement absorbant, peut être utilisé. Par exemple, le silicium peut être utilisé dans l'ultraviolet (10 nm à 380 nm) et le silicium fortement dopé N peut être utilisé dans l'infrarouge. Un cristal ionique présentant une permittivité négative peut également être utilisé, tel que le SiC dans l'infrarouge lointain (vers 10-12 µm) par exemple.

De même, dans les exemples précédemment illustrés, les éléments réflecteurs formant les réseaux de fentes sont déposés directement sur les lames 12 et 22. En variante, il est prévu une couche mince, de l'ordre du dixième de l'épaisseur de la lame, et d'indice de réfraction inférieur à celui de la lame, de manière à modifier l'indice de réfraction au contact de la lame. Cette couche mince additionnelle est par exemple une couche à gradient d'indice et peut par ailleurs remplir une autre fonction, telle qu'une fonction d'accroche, de passivation ou de protection.

En variante, même pour une filtre monodirectionnel, la largeur w peut aussi être choisie inférieure à P/3 pour avoir un filtre très sélectif présentant un taux de réjection meilleur que celui obtenu avec un filtre construit conformément à l'enseignement de la demande US8937277B2. Dans ce cas, le taux de transmission n'est pas nécessairement amélioré.

### Variantes de la lame :

D'autres matériaux sont utilisables pour réaliser les lames 12 et 22. Par exemple, les lames 12 et 22 peuvent être réalisées en GaP, AlAs, GaSb, ou PbTe qui présentent de hauts indices de réfraction dans le domaine optique. Le GaP est un bon choix si le pic de transmission du dispositif est dans le domaine du visible. Également, un nitrure de silicium SiₓN₁₋ₓ riche en silicium (x>1), moins coûteux, peut être utilisé dans le visible.

### Variantes de la couche intermédiaire 8 et des milieux 10 et 20:

D'autres matériaux sont utilisables pour réaliser la couche intermédiaire 8 et les milieux 10 et 20. Par exemple, le matériau utilisé peut être l'un des matériaux suivants : MgF₂, BaF₂, CaF₂, LiF. Le MgF₂ est un bon choix si le pic de transmission du dispositif est dans le domaine du visible.

La couche 8 et les milieux 10 et 20 peuvent aussi être réalisés par un empilement de plusieurs matériaux de bas indices de réfraction.

La couche 8 et le milieu 10 ne sont pas nécessairement réalisés dans un matériau à l'état solide. Ils peuvent aussi être réalisés à l'aide d'un matériau à l'état gazeux, comme de l'air, ou liquide. Dans le cas d'un matériau à l'état gazeux ou liquide, des cales réalisées dans un matériau à l'état solide sont interposées entre les filtres 4 et 6 pour obtenir l'épaisseur souhaitée de la couche intermédiaire 8. L'utilisation d'un matériau à l'état gazeux pour la réalisation de la couche 8 est avantageux notamment si le pic de transmission se situe dans le domaine des longueurs d'onde visibles.

Dans un autre mode de réalisation, la couche intermédiaire 8 est un oxyde transparent conducteur (par exemple de l'ITO) polarisable, raccordé électriquement à une troisième borne, et les éléments réflecteurs 14 et 24 sont situés, respectivement, dans les plans P_{4inf} et P₆ₛᵤₚ de l'empilement et raccordés chacun aux bornes 156 et 158. Dans cette configuration, un champ électrique entre la couche intermédiaire 8 et les éléments réflecteurs peut être appliqué pour modifier l'indice de réfraction des lames guide d'onde 12 et 22.

Le milieu 20 n'est pas nécessairement un milieu gazeux. Le milieu 20 peut aussi être un matériau à l'état solide ou liquide dont l'indice de réfraction vérifie les mêmes conditions que celles énoncées pour le milieu 20.

Lla couche 8 et les milieux 10 et 20 sont non-métalliques.

### Autres variantes :

Dans le dispositif 152, en variante, les éléments réflecteurs 14 sont électriquement raccordés à la borne 156 par l'intermédiaire d'un film électriquement conducteur et transparent au rayonnement électromagnétique incident. Ce film est par exemple déposé sur toute la surface supérieure des éléments réflecteurs 14 et des fentes 30. Par exemple, ce film peut être réalisé en ITO ("Indium Tin Oxyde) et avoir une épaisseur d'environ 50 nm.

Dans un autre mode de réalisation du dispositif 152, le champ électrique dans la couche 8 est généré à l'aide de plaques conductrices situées, respectivement, au-dessus de la lame 22 et en-dessous de la lame 12 et non plus à l'aide des éléments réflecteurs 14 et 24. Dans ce cas, ce sont ces plaques conductrices qui sont raccordées aux bornes 156, 158.

La couche 8 du dispositif 152 peut être réalisée dans d'autres matériaux électro-optiques. Par exemple, la couche 8 peut être réalisée à base de cristaux liquides nématiques, dont l'indice de réfraction effectif, de l'ordre de 1,5 à 2, peut être modifié par application d'une tension de polarisation appliquée entre les bornes 156 et 158. Dans ce cas, la modification de l'indice n₈ de diffraction est causée par un changement d'orientation des molécules de la couche 8. Cela a été démontré, par exemple, dans l'article « Polarization-independent actively tunable colour génération on imprinted plasmonic surfaces » de D. Franklin et al., Nat Commun 6, 7337 (2015).

En variante, le dispositif de filtrage optique comporte plus de deux filtres optiques identiques empilés les uns au-dessus des autres dans la direction Z. Dans ce cas, la couche intermédiaire qui sépare deux filtres optiques immédiatement consécutifs dans la direction Z est réalisée comme décrit pour la couche 8.

Les différentes variantes des filtres optiques décrites dans le brevet US8937277 peuvent être appliquées au cas des filtres optiques des dispositifs de filtrage décrits ici.

Le dispositif 2 décrit plus haut avec un réseau de bandes étendues dans la direction Y ne présente pas un pic de transmission dont l'amplitude est importante pour un rayonnement électromagnétique incident polarisé TE (« transverse électrique ») dont le champ électrique est parallèle à la direction Y. Pour remédier à cet inconvénient, il est possible de disposer, en amont du dispositif 2, un système de conversion de polarisation qui convertit le rayonnement électromagnétique incident non polarisé ou polarisé TE en un rayonnement électromagnétique présentant une seule polarisation TM. Par exemple, l'article « Efficient and monolithic polarization conversion system based on a polarization grating », de J. Kim et al, Applied Optics 51, 4852 (2012)) décrit un tel système microstructuré et compact avec une efficacité de conversion proche de 90%. Le rayonnement électromagnétique dont la polarisation a été convertie traverse ensuite le dispositif 2. L'association du système de conversion et du dispositif 2 permet de maximiser la puissance du flux transmis par le dispositif de filtrage.

L'enseignement donné dans ce texte peut aussi être mis en oeuvre en utilisant des filtres 4 et 6 dont les pics de transmission ne sont pas élevés. Dans ce cas, le dispositif 2 présente un pic de transmission plus élevé que le carré de l'amplitude des pics des filtres 4 et 6 sans pour autant être nécessairement supérieur à 85% ou 90%. De façon similaire, le taux de réjection du dispositif 2 n'est pas nécessairement supérieur à 90% mais reste dans tous les cas supérieur à celui des filtres 4 et 6 pris isolément.

### Chapitre III : Avantages des modes de réalisation décrits

Le fait que chacun des filtres optiques soient conformes à pratiquement tous les enseignements du brevet US8937277B1 permet d'obtenir un dispositif de filtrage optique qui conserve les avantages des filtres optiques décrits dans ce brevet. Ainsi, en particulier, le dispositif de filtrage optique est compact. Il est réglable dans une gamme étendue de longueurs d'onde, allant de 250 nm à une centaine de micromètres. Il présente une bande passante de transmission sélective, à savoir une largeur à mi-hauteur du pic de transmission inférieure à 10% de la longueur d'onde pour laquelle le pic est maximum.

De plus, à cause de l'existence d'un couplage modéré des champs évanescents des filtres 4 et 6, le dispositif présente à la fois un taux de transmission plus élevé et un taux de réjection plus élevé sur une plage spectrale autour du pic de transmission de largeur au moins égale à la moitié de la longueur d'onde pour laquelle le pic est maximum. Dans cette plage spectrale, le taux de réjection est typiquement supérieur à 90%.

Le fait de choisir la largeur w supérieure à P/3, notamment lorsque que des filtres monodirectionnels sont utilisés, permet d'obtenir un taux de transmission supérieur à 80% ou 85%.

Lorsque les éléments réflecteurs affleurent les plans P₄ₛᵤₚ et P_{6inf}, les taux de transmission et de réjection sont améliorés.

Le fait de réaliser les éléments réflecteurs en argent ou en aluminium permet de minimiser les pertes optiques par absorption et d'améliorer le taux de transmission notamment quand la longueur d'onde λ₀ est dans le domaine visible.

Lorsque l'indice de réfraction n₈ est inférieur à 1,5, le taux de transmission est amélioré.

Le fait de réaliser la couche intermédiaire dans un matériau qui est en plus électro-optique permet de modifier dynamiquement les caractéristiques du dispositif de filtrage optique.

Le fait que les éléments réflecteurs soient rectangulaires permet d'obtenir un réseau de fentes parallèles à la direction X et un réseau de fentes parallèles à la direction Y. Ainsi, le dispositif permet de transmettre, à la fois, la composante du rayonnement électromagnétique polarisée parallèlement aux fentes et, aussi, la composante polarisée orthogonalement.

## Revendications

1. Dispositif de filtrage optique présentant une réponse en transmission avec un maximum à une longueur d'onde λ₀, ce dispositif comportant :
- un premier filtre optique (4; 230) qui s'étend depuis un premier plan limitrophe inférieur (P_{4inf}) jusqu'à un premier plan limitrophe supérieur parallèle (P₄ₛᵤₚ), chacun de ces premiers plans limitrophes étant situés à l'interface entre le premier filtre et un milieu extérieur, ce premier filtre optique comportant successivement en allant du premier plan limitrophe vers l'autre premier plan limitrophe:
- une lame (12) présentant un indice de réfraction n₁₂ à la longueur d'onde λ₀ et dont l'épaisseur est comprise entre 0,8λ₀/(2n₁₂) et 1,2λ₀/(2n₁₂), l'indice de réfraction n₁₂ étant supérieur à 5n₁₀/3, où n₁₀ est le plus grand des indices de réfractions choisi dans le groupe constitué des indices de réfraction à la longueur d'onde λ₀ des milieux situés à l'interface avec le premier filtre,
- des éléments réflecteurs (14; 232), réalisés dans un matériau à permittivité électrique négative à la longueur d'onde λ₀, déposés sur une face de la lame, ces éléments réflecteurs définissant un réseau périodique de fentes traversantes parallèles formant un filtre passe-bande autour de la longueur d'onde λ₀, la période de ce réseau de fentes traversantes étant comprise entre λ₀/n₁₂ et 2λ₀/n₁₂, cependant le dispositif comporte également :
- un second filtre optique (6; 122) situé au-dessus du premier filtre optique et qui s'étend depuis un second plan limitrophe inférieur (P_{6inf}) jusqu'à un second plan limitrophe supérieur parallèle (P₆ₛᵤₚ), ce second filtre optique comportant une lame (22) identique à la lame (12) du premier filtre optique et des éléments réflecteurs (24) déposés sur une face de cette lame du second filtre optique et qui définissent un réseau périodique de fentes identique au réseau périodique de fentes du premier filtre optique,
- une couche intermédiaire (8) qui s'étend depuis le premier plan supérieur (P₄ₛᵤₚ) jusqu'au second plan inférieur (P_{6inf}), cette couche intermédiaire présentant un indice de réfraction n₈ à la longueur d'onde λ₀ et une épaisseur h₈, l'indice de réfraction n₈ étant inférieur à 3n₁₂/5 et l'épaisseur h₈ étant comprise entre δ et 3δ, où le coefficient δ est défini par la relation suivante : 1/δ = (2πn₈/λ₀)((λ₀/(n₈P))²-1)^{0,5}, où P est la période du réseau de fentes.

2. Dispositif selon la revendication 1, dans lequel l'épaisseur h₈ est comprise entre 1,25δ et 2,75δ.

3. Dispositif selon l'une quelconque des revendications précédentes, dans lequel la largeur des fentes est supérieure à P/5.

4. Dispositif selon l'une quelconque des revendications précédentes, dans lequel les éléments réflecteurs (14) définissent un seul réseau de fentes périodiques et la largeur des fentes de ce réseau périodique est supérieure à P/3.

5. Dispositif selon la revendication 3 ou 4, dans lequel la largeur des fentes est inférieure à 2P/3.

6. Dispositif selon l'une quelconque des revendications précédentes, dans lequel les éléments réflecteurs (14; 232) du premier filtre affleurent le premier plan limitrophe supérieur et les éléments réflecteurs (24) du second filtre affleurent le second plan limitrophe inférieur.

7. Dispositif selon l'une quelconque des revendications précédentes, dans lequel les éléments réflecteurs (14, 24) sont réalisés en argent ou en aluminium.

8. Dispositif selon l'une quelconque des revendications précédentes, dans lequel l'indice de réfraction n₈ est inférieur ou égal à 1,5.

9. Dispositif selon l'une quelconque des revendications précédentes, dans lequel :
- la couche intermédiaire (8) est réalisée dans un matériau électro-optique dont l'indice de réfraction n₈ varie en fonction de l'amplitude E du champ électrique qui traverse la couche intermédiaire, et
- le dispositif comporte :
- une première borne (156) de raccordement à laquelle sont raccordés électriquement les éléments réflecteurs (14) du premier filtre optique, et
- une seconde borne (158) de raccordement à laquelle sont raccordés électriquement les éléments réflecteurs (24) du second filtre optique, les première et seconde bornes de raccordement étant électriquement isolées l'une de l'autre.

10. Dispositif selon l'une quelconque des revendications précédentes, dans lequel le nombre de fentes du réseau de fentes est supérieur à λ₀/Δλ, où Δλ est la largeur à mi-hauteur du pic de transmission à la longueur d'onde λ₀.

11. Dispositif selon l'une quelconque des revendications précédentes, dans lequel :
- la projection orthogonale de chaque élément réflecteur sur l'un des plans limitrophes est un parallélogramme dont deux cotés sont parallèles à une première direction et dont les deux autres cotés sont parallèles à une seconde direction non colinéaire avec la première direction,
- ces éléments réflecteurs sont disposés périodiquement les uns par rapport aux autres dans les première et seconde directions pour définir un premier réseau périodique de fentes traversantes parallèles à la première direction et un second réseau périodique de fentes parallèles à la seconde direction.

12. Dispositif selon la revendication 11, dans lequel la projection orthogonale de chaque élément réflecteur sur un plan limitrophe est un carré.

13. Dispositif selon l'une quelconque des revendications précédentes, dans lequel les éléments réflecteurs sont réalisés en métal et leur épaisseur est supérieur à l'épaisseur de peau à la longueur d'onde λ₀.

14. Appareil réglable de filtrage optique, **caractérisé en ce que** cet appareil comporte :
- un dispositif (152) de filtrage optique conforme à la revendication 9,
- une source (154) de tension électriquement raccordée entre les bornes (156, 158) de raccordement du dispositif de filtrage, cette source de tension étant apte à générer une différence de potentiels entre ces deux bornes de raccordement, cette source de tension comportant un module (170) de réglage de la différence de potentiels générée.

15. Détecteur comportant :
- une ou plusieurs cellules de détection d'un rayonnement électromagnétique incident, et
- un dispositif (140a, 140b; 208) de filtrage du rayonnement électromagnétique incident situé devant chaque cellule de détection,
**caractérisé en ce que** le dispositif de filtrage est conforme à l'une quelconque des revendications 1 à 13.

## Patentansprüche

1. Optische Filtervorrichtung, die eine Transmissionsantwort mit einem Maximum bei einer Wellenlänge λ₀ aufweist, wobei diese Vorrichtung umfasst:
- einen ersten optischen Filter (4; 230), der sich von einer ersten unteren Grenzebene (P_{4inf}) aus bis zu einer parallelen ersten oberen Grenzebene (P₄ₛᵤₚ) erstreckt, wobei jede dieser ersten Grenzebenen an der Grenzfläche zwischen dem ersten Filter und einem Außenmilieu gelegen ist, wobei dieser erste optische Filter aufeinander folgend von der ersten Grenzebene zu der anderen ersten Grenzebene hin umfasst:
- eine Scheibe (12), die einen Brechungsindex n₁₂ bei der Wellenlänge λ₀ aufweist und deren Dicke zwischen 0,8λ₀/(2n₁₂) und 1,2λ₀/(2n₁₂) beträgt, wobei der Brechungsindex n₁₂ größer als 5n₁₀/3 ist, wobei n₁₀ der größte der Brechungsindizes ist, der aus der Gruppe gewählt ist, die aus den Brechungsindizes bei der Wellenlänge λ₀ der an der Grenzfläche zu dem ersten Filter gelegenen Milieus besteht,
- reflektierende Elemente (14; 232), die aus einem Material mit negativer elektrischer Permittivität bei der Wellenlänge λ₀ ausgeführt sind und auf eine Seite der Scheibe aufgebracht sind, wobei diese reflektierenden Elemente ein periodisches Gitter aus parallelen durchgehenden Schlitzen definieren, das einen Bandpassfilter um die Wellenlänge λ₀ herum bildet, wobei die Periode dieses Gitters aus durchgehenden Schlitzen zwischen λ₀/n₁₂ und 2λ₀/n₁₂ beträgt, wobei die Vorrichtung jedoch auch umfasst:
- einen zweiten optischen Filter (6; 122), der über dem ersten optischen Filter gelegen ist und der sich von einer zweiten unteren Grenzebene (P_{6inf}) aus bis zu einer parallelen zweiten oberen Grenzebene (P₆ₛᵤₚ) erstreckt, wobei dieser zweite optische Filter eine Scheibe (22) umfasst, die identisch mit der Scheibe (12) des ersten optischen Filters ist, und reflektierende Elemente (24), die auf eine Seite dieser Scheibe des zweiten optischen Filters aufgebracht sind und die ein periodisches Gitter aus Schlitzen definieren, das identisch mit dem periodischen Gitter aus Schlitzen des ersten optischen Filters ist,
- eine Zwischenschicht (8), die sich von der ersten oberen Ebene (P₄ₛᵤₚ) bis zu der zweiten unteren Ebene (P_{6inf}) erstreckt, wobei diese Zwischenschicht einen Brechungsindex n₈ bei der Wellenlänge λ₀ und eine Dicke h₈ aufweist, wobei der Brechungsindex n₈ kleiner als 3n₁₂/5 ist und die Dicke h₈ zwischen δ und 3δ beträgt, wobei der Koeffizient δ durch die folgende Gleichung definiert wird: 1/δ = (2πn₈/λ₀) ((λ₀/(n₈P))²-1)^{0,5}, wobei P die Periode des Gitters aus Schlitzen ist.

2. Vorrichtung nach Anspruch 1, bei der die Dicke h₈ zwischen 1,25δ und 2,75δ beträgt.

3. Vorrichtung nach einem der vorhergehenden Ansprüche, bei der die Breite der Schlitze größer als P/5 ist.

4. Vorrichtung nach einem der vorhergehenden Ansprüche, bei der die reflektierenden Elemente (14) ein einziges Gitter aus periodischen Schlitzen definieren und die Breite der Schlitze dieses periodischen Gitters größer als P/3 ist.

5. Vorrichtung nach Anspruch 3 oder 4, bei der die Breite der Schlitze kleiner als 2P/3 ist.

6. Vorrichtung nach einem der vorhergehenden Ansprüche, bei der die reflektierenden Elemente (14; 232) des ersten Filters bündig mit der ersten oberen Grenzebene sind und die reflektierenden Elemente (24) des zweiten Filters bündig mit der zweiten unteren Grenzebene sind.

7. Vorrichtung nach einem der vorhergehenden Ansprüche, bei der die reflektierenden Elemente (14, 24) aus Silber oder aus Aluminium ausgeführt sind.

8. Vorrichtung nach einem der vorhergehenden Ansprüche, bei welcher der Brechungsindex n₈ kleiner als oder gleich 1,5 ist.

9. Vorrichtung nach einem der vorhergehenden Ansprüche, bei der:
- die Zwischenschicht (8) aus einem elektro-optischen Material ausgeführt ist, dessen Brechungsindex n₈ in Abhängigkeit von der Amplitude E des elektrischen Feldes, das die Zwischenschicht durchquert, variiert und
- die Vorrichtung umfasst:
- eine erste Anschlussklemme (156), an welche die reflektierenden Elemente (14) des ersten optischen Filters elektrisch angeschlossen sind, und
- eine zweite Anschlussklemme (158), an welche die reflektierenden Elemente (24) des zweiten optischen Filters elektrisch angeschlossen sind, wobei die ersten und zweiten Anschlussklemme elektrisch voneinander isoliert sind.

10. Vorrichtung nach einem der vorhergehenden Ansprüche, bei der die Anzahl von Schlitzen des Gitters aus Schlitzen größer als λ₀/Δλ ist, wobei Δλ die Breite auf halber Höhe des Transmissionspeaks bei der Wellenlänge λ₀ ist.

11. Vorrichtung nach einem der vorhergehenden Ansprüche, bei der:
- die orthogonale Projektion jedes reflektierenden Elements auf eine der Grenzebenen ein Parallelogramm ist, bei dem zwei Seiten parallel zu einer ersten Richtung sind und bei dem die beiden anderen Seiten parallel zu einer zweiten Richtung sind, die nicht kollinear zu der ersten Richtung ist,
- diese reflektierenden Elemente periodisch zueinander in den ersten und zweiten Richtungen angeordnet sind, um ein erstes periodisches Gitter aus durchgehenden Schlitzen, die parallel zu der ersten Richtung sind, und ein zweites periodisches Gitter aus Schlitzen, die parallel zu der zweiten Richtung sind, zu definieren.

12. Vorrichtung nach Anspruch 11, bei der die orthogonale Projektion jedes reflektierenden Elements auf eine Grenzebene ein Quadrat ist.

13. Vorrichtung nach einem der vorhergehenden Ansprüche, bei der die reflektierenden Elemente aus Metall ausgeführt sind und ihre Dicke größer als die Eindringtiefe bei der Wellenlänge λ₀ ist.

14. Regelbares optisches Filtergerät, **dadurch gekennzeichnet, dass** dieses Gerät umfasst:
- eine optische Filtervorrichtung (152) nach Anspruch 9,
- eine Spannungsquelle (154), die elektrisch zwischen den Anschlussklemmen (156, 158) der Filtervorrichtung angeschlossen ist, wobei diese Spannungsquelle geeignet ist, eine Potentialdifferenz zwischen diesen beiden Anschlussklemmen zu erzeugen, wobei diese Spannungsquelle ein Modul (170) zum Regeln der erzeugten Potentialdifferenz umfasst.

15. Detektor, umfassend:
- eine oder mehrere Detektionszellen zur Detektion einer einfallenden elektromagnetischen Strahlung und
- eine Vorrichtung (140a, 140b; 208) zum Filtern der einfallenden elektromagnetischen Strahlung, die vor jeder Detektionszelle angeordnet ist, **dadurch gekennzeichnet, dass** die Filtervorrichtung eine Filtervorrichtung nach einem der Ansprüche 1 bis 13 ist.

## Claims

1. Optical filtering device having a transmission response with a maximum at a wavelength λ₀, this device comprising:
- a first optical filter (4; 230) extending from a first lower boundary plane (P_{4inf}) to a parallel first upper boundary plane (P₄ₛᵤₚ), each of these first boundary planes being located at the interface between the first filter and an external medium, this first optical filter comprising in succession from one first boundary plane to the other first boundary plane:
- a plate (12) having a refractive index n₁₂ at the wavelength λ₀ and the thickness of which is comprised between 0.8λ₀/(2n₁₂) and 1.2λ₀/(2n₁₂), the refractive index n₁₂ being greater than 5n₁₀/3, where n₁₀ is the highest of the refractive indices of the group consisting of the refractive indices at the wavelength λ₀ of the media located at the interface with the first filter,
- reflective elements (14; 232), which are made of a material of negative electrical permittivity at the wavelength λ₀, and which are deposited on one face of the plate, these reflective elements defining a periodic array of parallel through-slots forming a band-pass filter around the wavelength λ₀, the period of this array of through-slots being comprised between λ₀/n₁₂ and 2λ₀/n₁₂,
the device however also comprising:
- a second optical filter (6; 122) that is located above the first optical filter and that extends from a second lower boundary plane (P_{6inf}) to a parallel second upper boundary plane (P₆ₛᵤₚ), this second optical filter comprising a plate (22) identical to the plate (12) of the first optical filter and reflective elements (24) that are deposited on one face of this plate of the second optical filter and that define a periodic array of slots identical to the periodic array of slots of the first optical filter,
- an intermediate layer (8) that extends from the first upper plane (P₄ₛᵤₚ) to the second lower plane (P_{6inf}), this intermediate layer having a refractive index n₈ at wavelength λ₀ and a thickness h₈, the refractive index n₈ being lower than 3n₁₂/5 and the thickness h₈ being comprised between δ and 3δ, where the coefficient δ is defined by the following relationship: 1/5 = (2πn₈/λ₀)((λ₀/(n₈P))²-1)^{0.5}, where P is the period of the array of slots.

2. Device according to Claim 1, wherein the thickness h₈ is comprised between 1.255 and 2.75δ.

3. Device according to any one of the preceding claims, wherein the width of the slots is greater than P/5.

4. Device according to any one of the preceding claims, wherein the reflective elements (14) define a single array of periodic slots and the width of the slots of this periodic array is greater than P/3.

5. Device according to Claim 3 or 4, wherein the width of the slots is less than 2P/3.

6. Device according to any one of the preceding claims, wherein the reflective elements (14; 232) of the first filter are flush with the first upper boundary plane and the reflective elements (24) of the second filter are flush with the second lower boundary plane.

7. Device according to any one of the preceding claims, wherein the reflective elements (14, 24) are made of silver or aluminium.

8. Device according to any one of the preceding claims, wherein the refractive index n₈ is lower than or equal to 1.5.

9. Device according to any one of the preceding claims, wherein:
- the intermediate layer (8) is made of an electro-optical material the refractive index n₈ of which varies as a function of the amplitude E of the electric field passing through the intermediate layer, and
- the device comprises:
- a first connection terminal (156) to which the reflective elements (14) of the first optical filter are electrically connected, and
- a second connection terminal (158) to which the reflective elements (24) of the second optical filter are electrically connected, the first and second connection terminals being electrically insulated from each other.

10. Device according to any one of the preceding claims, wherein the number of slots of the array of slots is greater than λ₀/Δλ, where Δλ is the full width at half maximum of the transmission peak at the wavelength λ₀.

11. Device according to any one of the preceding claims, wherein:
- the orthogonal projection of each reflective element onto one of the boundary planes is a parallelogram two sides of which are parallel to a first direction and the other two sides of which are parallel to a second direction that is not collinear with the first direction,
- these reflective elements are placed periodically with respect to one another in the first and second directions so as to define a first periodic array of through-slots parallel to the first direction and a second periodic array of slots parallel to the second direction.

12. Device according to Claim 11, wherein the orthogonal projection of each reflective element onto a boundary plane is a square.

13. Device according to any one of the preceding claims, wherein the reflective elements are made of metal and their thickness is greater than the skin depth at the wavelength λ₀.

14. An adjustable optical filtering apparatus, **characterized in that** this apparatus comprises:
- an optical filtering device (152) according to Claim 9,
- a voltage source (154) electrically connected between the connection terminals (156, 158) of the filtering device, this voltage source being able to generate a potential difference between these two connection terminals, this voltage source comprising a module (170) for adjusting the generated potential difference.

15. Detector comprising:
- one or more cells for detecting incident electromagnetic radiation, and
- a device (140a, 140b; 208) for filtering the incident electromagnetic radiation, located in front of each detecting cell,
**characterized in that** the filtering device is according to any one of Claims 1 to 13.
